# EUROPÄISCHE PATENTSCHRIFT

(11) **EP 3 384 178 B1**
(45) Veröffentlichungstag und Bekanntmachung des Hinweises auf die Patenterteilung: **04.03.2020**
(21) Anmeldenummer: 16778769.6
(22) Anmeldetag: 04.10.2016
(51) Int. Cl.: F16F 13/10, F16F 13/14, F16F 13/26

(54) **HYDRAULISCHE LAGERBUCHSE**
HYDRAULIC BEARING BUSHING
COUSSINET DE PALIER HYDRAULIQUE

(30) Priorität: 03.12.2015 DE 102015224149
(43) Veröffentlichungstag der Anmeldung: 10.10.2018
(73) Patentinhaber: ContiTech Luftfedersysteme GmbH, 30165 Hannover (DE)
(72) Erfinder: GROTSCH, Sara, 22303 Hamburg (DE); SANZ, Andre, 21077 Hamburg (DE)
(74) Vertreter: Kilsch, Armin Ralph
(86) Internationale Anmeldenummer: PCT/EP2016/073630
(87) Internationale Veröffentlichungsnummer: WO 2017/092909

(56) Entgegenhaltungen:
- EP-A1- 0 248 714
- EP-A1- 2 461 067
- WO-A1-2015/139857
- GB-A- 2 322 427
- US-A1- 2002 079 628

## Beschreibung

Die Erfindung betrifft eine hydraulische Lagerbuchse, insbesondere für Schienenfahrwerke, wobei die hydraulische Lagerbuchse einen innenliegenden Gummi-Verbund-Körper, vorzugsweise Gummi-Metall-Körper aufweist mit einer zur Aufnahme eines Zapfens ausgebildete innere Buchse, vorzugsweise aus Metall, einen über den äußeren Umfang der Buchse anvulkanisierten und die Buchse im Wesentlichen umfassenden ringförmigen Gummikörper sowie zwei an beiden axialen Enden des Gummikörpers anvulkanisierte ringförmige Stützringe, ebenfalls vorzugsweise aus Metall, außerdem ein den inneren Gummi-Metall-Körper umgebendes außenliegendes ringförmiges Gehäuse (Außenring), an dessen Innenumfang die Stützringe abgestützt sind. Weiterhin weist die Hydraulische Lagerbuchse mindestens zwei in Umfangsrichtung zwischen dem ringförmigen Gummikörper und dem ringförmigen Gehäuse ausgebildete, über Teilbereiche des Umfangs sich erstreckende und mit einer Hydraulikflüssigkeit befüllbare Kammern auf, wobei die Kammern über mindestens einen Verbindungs- und Drosselkanal miteinander kommunizieren, der die Kammern zum Austausch von Flüssigkeit miteinander verbindet.

Derartige hydraulische Lagerbuchsen zur Beeinflussung und/oder Einstellung des Dämpfungsverhaltens von Lagern an Fahrzeugen, insbesondere Schienenfahrzeugen, sind bereits in unterschiedlichen Ausführungen bekannt. Solche auch als Radsatzführungsbuchsen bezeichnete Lagerbuchsen werden zur elastischen Lagerung von beweglichen Teilen wie etwa den Teilen eines Laufwerks eines Fahrzeugs, insbesondere eines Schienenfahrzeugs eingesetzt.

In der Regel besteht ein solches Gummi-Metall-Lager aus einem innen liegenden Gummimetallelement, welches in einer metallenen Hülse aufgenommen ist. Die äußere metallene Hülse ist zum Beispiel mit der Karosserie des Fahrzeugs verbunden, während das innen liegende Gummimetallelement einen Zapfen aufnimmt, der zu einem Teil des Fahrwerks gehört.

Zwischen dem elastomeren Teil/ Gummiteil des Gummimetallelement und der metallenen Hülse als Gehäuseelement sind über Teilbereiche des Umfangs sich erstreckende und mit einem Hydraulikfluid/einer Hydraulikflüssigkeit befüllbare Kammern angeordnet. Diese befüllbaren Kammern sind untereinander oder mit einer Ausgleichskammer durch mindestens einen Verbindungskanal verbunden.

Bei Belastung der hydraulischen Buchse wird durch das Einfedern des Gummiteiles eine Kammer verkleinert, so dass ein Teil der Hydraulikflüssigkeit in der Kammer durch den Verbindungskanal in die andere Kammer oder in die Ausgleichskammer strömt. Der Verbindungskanal wirkt dann als hydraulische Drossel, nämlich als Drosselkanal. Das Durchströmen des entsprechend ausgebildeten Drosselkanals erzeugt Dissipation und somit Dämpfungsarbeit.

Eine hydraulische Flüssigkeit wird somit in zumindest teilweise von dem gummielastischen Material umgebenen, etwa diametral gegenüberliegend angeordneten Kammern zum Bereitstellen weiterer schwingungsabsorbierender Eigenschaften bereitgestellt. Dabei dient der Verbindungskanal mit seiner Drosseleigenschaft als Schwingungstilger oder zum Bereitstellen einer dynamischen Steifigkeit in entsprechender Belastungsrichtung dient.

Die Dämpfungseigenschaften solcher hydraulischen Buchsen sind aufgrund ihrer Bauweise frequenzabhängig. Üblicherweise werden niederfrequente Schwingungen, also Schwingungen mit Frequenzen unterhalb von ca. 2 Hz, die im allgemeinen mit Amplituden von ca. 10 mm auftreten, stark gedämpft, während hochfrequente Schwingungen, also Schwingungen im Frequenzbereich oberhalb des genannten Wertes, aufgrund der Trägheit und Inkompressibilität der Hydraulikflüssigkeit und der Gummifeder nahezu ungedämpft durchgehen. Diese Eigenschaften macht man sich dadurch zu Nutze, dass durch die Ausgestaltung des Verbindungskanals die Dämpfung und die Steifigkeit frequenzabhängig eingestellt werden.

Das auf einem Schwingungsverhalten einer hydraulischen Flüssigkeitssäule beruhende elastische Verhalten kann dabei hinsichtlich der Steifigkeit und Dämpfung über die Länge des Verbindungskanals eingestellt werden. Bei einem langen Überlaufkanal können von der Buchse aufgefangene Stöße die Hydraulikflüssigkeit über den Überlaufkanal von einer in die andere Kammer nur dann hinreichend gut leiten, wenn der zeitliche Abstand der Stöße bzw. Schwingungen groß, d.h. die Frequenz der Schwingungen klein ist. Erfolgen die mechanischen Belastungen dagegen mit einer hohen Frequenz, so kann aufgrund der Trägheit und Inkompressibilität der Hydraulikflüssigkeit, des zur Verfügung stehenden Kanalquerschnitts und der Kanallänge der Verbindungs- oder Überlaufkanal nicht schnell genug zwischen zwei aufeinanderfolgenden Stößen durchströmt bzw. überwunden werden, um durch einen Überlauf der belasteten Kammer zur unbelasteten Kammer eine Elastizität bereitzustellen.

Diesen Effekt macht man sich zunutze, um beispielsweise bei Schienenfahrzeugen bei schneller Fahrt und damit bei einer kurzen Abfolge von Unebenheiten auf der Schiene und dadurch auftretende mechanische Stöße eine größere Steifigkeit bereitzustellen. Dadurch wird die Fahrsicherheit bei hohen Geschwindigkeiten durch eine harte Lagerung und damit eine Vermeidung einer zu großen Weichheit gewährleistet.

Bei geringen Geschwindigkeiten, das heißt bei einer Kurvenfahrt und dergleichen ist dagegen eine geringe Steifigkeit von Vorteil und die entsprechende Weichheit wird dadurch erreicht, dass die entsprechende Hydraulikfluidsäule zwischen zwei aufeinander folgenden Stößen von einer Kammer in die andere Kammer überführt werden kann. Die Grenzfrequenz, die das steife Verhalten von dem dämpfenden Verhalten mit einer weichen Lagerung abgrenzt, wird durch die Kanallänge derart gegeben, dass je länger der Überlaufkanal ist, umso kleiner ist die Grenzfrequenz oberhalb der eine steife Lagerung mit einer harten Buchse zu beobachten ist.

Im Stand der Technik sind also hydraulische Radsatzführungsbuchsen bekannt, die aus einem Metall-Gummi-Körper zur Realisierung der statischen Steifigkeiten und zwei integrierten Kammern mit Verbindungskanal bestehen. Durch diesen definierten Verbindungskanal wird Fluid ausgetauscht und es ergibt sich eine unter verschiedenen Frequenzen veränderte dynamische Steifigkeit etwa in Fahrtrichtung.

Aus der DE 103 10 633 A1 ist eine Buchse für ein Lager zur elastischen Verbindung von Teilen eines Laufwerks beschrieben. Die insbesondere für Schienenfahrzeuge bestimmte Buchse weist ein inneres Gehäuse auf, um das zur Bildung eines Ringspaltes radial beabstandet ein äußeres Gehäuse vorgesehen ist. In dem Ringspalt befindet sich ein gummielastisches Element, das zwei diametral gegenüberliegende Kammern begrenzt, die mit einer hydraulischen Flüssigkeit gefüllt sind und über einen als Schwingungstilger ausgebildeten Überlaufkanal miteinander verbunden sind. Der Überlaufkanal kann dabei wendelförmig ausgeführt sein und am Außen- und/oder Innenumfang der Buchse bzw. ihrer Gehäuseteile entlang geführt sein, läuft aber mindestens teilweise entweder durch das Innenteil oder Außenteil des Lagers.

Eine bevorzugte Ausführung der Buchse zeichnet sich dadurch aus, dass der Überlaufkanal zwischen einer Innenwandung des inneren Gehäuseteils und einer etwa wendelförmig in einen Außenbereich eines von der Buchse umschlossenen bolzenförmigen Elements eingebrachten Nut gebildet wird. Das Einbringen von Nuten an Innen- oder Außenflächen von zylinderförmigen Körpern ist aber aufwendig. Insbesondere ist das Einbringen einer umlaufenden Nut an einem Lenkerbolzen eines Achslenkers, also an einem Kraft-übertragenden Element ohne Einschränkung von dessen Funktion nur bei einer Ausführung des Achslenkers aus einem hochwertigen Material wie etwa aus einem vergüteten Stahl mit Nachteilen möglich.

Eine Ausgestaltung bzw. das Vorsehen von Kanälen ist aus bekannten, beispielsweise bei Fahrzeugen eingesetzten Hydrolagern bekannt. So beschreibt die deutsche Patentschrift 199 19 876 C1 ein steuerbares Hydrolager mit einer Arbeitskammer, die ringförmig von einer mit einer elektro-rheologischen Flüssigkeit gefüllten Ausgleichskammer umgeben ist. Ein ringspaltförmiger Überströmkanal verbindet die Arbeitskammer und die Ausgleichskammer und weist zwei sich gegenüberliegende Elektroden zur Erzeugung eines Hochspannungsfeldes darin auf, um die Viskosität der darin befindlichen Flüssigkeit verändern bzw. einstellen zu können. Der Überströmkanal verläuft spiralförmig um die Arbeitskammer, wobei die Wandungen des Überströmkanals aus elektrisch isolierenden Trägerschichten gebildet sind. Eine Änderung der Kanallänge ist hier aber mit einem großen Konstruktionsaufwand verbunden.

So ist aus der DE 34 10 781 A1 ein Zweikammer-Motorlager mit hydraulischer Dämpfung mit zwei mit einer Flüssigkeit gefüllten, von gummielastischen Umfangswänden umgebenen Kammern, die über einen in einer Düsenplatte verlaufenden Düsenkanal miteinander verbunden sind, bekannt. Bei dem Zweikammer-Motorlager ist die Düsenplatte horizontal so geteilt, dass zumindest ein Teil des Düsenkanals in einer unteren Plattenhälfte verläuft, die über einen zentralen, das Lagergehäuse durchsetzenden Zapfen unter Veränderung von Länge und/oder Querschnitt des freien Düsenkanals gegenüber der fest eingebauten oberen Plattenhälfte um ihre Mittelachse verdrehbar ist. Somit lassen sich auf einfache Weise Länge und/oder Querschnitt des Düsenkanals verändern und so selbst bei eingebautem Lager in einem Fahrzeug eine Einstellung von individuellen Dämpfungseigenschaften realisieren. Die Realisierung der Verstellbarkeit setzt hier allerdings einen großen Konstruktionsaufwand voraus und schließt einen Einsatz in üblichen Lagerbuchsen aus.

Das US-Patent 4,909,490 offenbart eine Vorrichtung für Maschinen, insbesondere elastische Aufhängungen für Fahrzeugmotoren oder Kabinen von Lastkraftwagen zur Entkopplung von Vibrationen. Ein zwei Kammern trennender Körper ist aus zwei Platten gebildet, die mittels Vorsprüngen und entgegengesetzt in der jeweils anderen Platte angebrachten Bohrungen passgenau miteinander verbindbar sind. In einer der Platten oder passgenau in beiden Platten ist eine spiralförmigen Nut zur Ausbildung des Überströmkanals für die Hydraulikflüssigkeit vorgesehen. Durch die Länge des Kanals kann das gewünschte Dämpfungs- bzw. Steifigkeitsverhalten der Vorrichtung eingestellt werden. Die Länge des Kanals kann zur Einstellung der gewünschten Dämpfungseigenschaften verändert werden, jedoch ist die Einstellung der Kanallänge an einem zwischen zwei Kammern befindlichen zentralen Bereich der Vorrichtung aufwendig. Denn es ist zur Änderung der Kanallänge eine vollständige Zerlegung der Vorrichtung notwendig.

Der Erfindung stellt sich daher die Aufgabe, die gattungsgemäße Buchse so zu gestalten, dass ein dynamisches Steifigkeitsverhalten durch eine Veränderung der Länge des Verbindungskanals auf einfache Weise vorgegeben werden kann. Die hydraulische Lagerbuchse soll dabei im niedrigen Frequenzbereich weiche Steifigkeiten und bei definierten höheren Frequenzen hohe Steifigkeiten in Fahrtrichtung realisieren, eine günstige Fertigung durch Vermeidung von Kerbwirkung bei kraftführenden Bauteilen und dadurch

Einsatz günstiger Materialien realisieren, sowie sehr einfache Gestaltung und Fertigungsverfahren bereitstellen..

Gelöst wird die Aufgabe durch die Merkmale des Hauptanspruchs, dessen Oberbegriff aus der US2002/079628A1 bekannt ist. Vorteilhafte Weiterbildungen sind in den Unteransprüchen enthalten.

Dabei ist an mindestens einer Stirnseite der hydraulischen Lagerbuchse ein axial außenseitig angeordneter ringförmiger und an dem endseitigen Stützring außen anliegender Deckel vorgesehen. Der Verbindungs- und Drosselkanal ist durch zusammenwirkende und im Wesentlichen ring- oder spiralförmige Ausnehmungen im Stützring einerseits und im Deckel anderseits ausgebildet, wobei die Ausnehmungen über Bohrungen an die kommunizierenden Kammern angeschlossen sind.

Durch die erfindungsgemäße Konstruktion des Verbindungskanals sind sehr einfache Variantenausführungen für variable statische und dynamische Steifigkeiten möglich. Zudem wird vermieden, dass umfangreiche und komplizierte Herstellvorgänge in Form von z.B. spanender Bearbeitung des Außen- und/oder Innenumfang der Buchse bzw. ihrer Gehäuseteile durchgeführt werden müssen, um einen Verbindungskanal bereitzustellen.

Erfindungsgemäß sind Deckel und Stützring durch mindestens einen Zwischenring voneinander getrennt, welcher Durchgänge oder Bohrungen zur Verbindung der beiderseits ausgebildeten Ausnehmungen aufweist. Durch eine solche Ausführung wird die Möglichkeit der einfachen Herstellung und Ausbildung von Variationen noch gesteigert. So können zum Beispiel allein durch die Drehung und unterschiedliche Positionierung des Zwischenrings einzelne Kanalquerschnitte abgesperrt oder hinzu geschaltet werden, so dass auf einfachste Weise unterschiedliche Steifigkeiten realisiert werden können.

Eine andere Erhöhung der Varianten in diesem Sinne ergibt sich mit einer weiteren vorteilhaften Ausbildung, bei der Deckel und Stützring durch mindestens einen weiteren Zwischenring bzw. Kanalring voneinander getrennt sind, welcher ebenfalls ring- oder spiralförmige Ausnehmungen aufweist, die mit den Ausnehmungen im Stützring und/oder im Deckel kommunizieren. Damit lassen sich insbesondere die Kanallänge bei mehreren nebeneinanderliegenden kommunizierenden Ausnehmung und auch der Kanalquerschnitt je nach Anwendungsfall günstig beeinflussen.

So können z. B. die jeweiligen Enden des Kanalsystems mit den zwei gegenüberliegenden Kammern durch zwei oder mehrere Kanäle verbunden werden. Je nach der geforderten dynamischen Steifigkeit sind mehrere Lagen von Zwischenringen, unterscheidliche Kanalquerschnitte Kanallängen möglich. Die Kanalsystem ist damit als "Sandwichpaket" ausgeführt, wobei die Einzellagen definiert zueinander ausgerichtet sind. Die Ausrichtung des Kanalsystems im Paket ist definiert zum Gummi-Metall-Körper ausgerichtet.

Eine weitere und in ihren Vorteilen oben bereits dargestellte Ausbildung besteht darin, dass Deckel und/oder der Zwischenring zur Veränderung der Kanalgeometrie und damit der Drosseleigenschaften relativ zum Stützring und/oder gegeneinander drehbeweglich und/oder in unterschiedlichen relativen Stellungen zueinander fixierbar ausgeführt sind.

Die Erfindung bringt auch den Vorteil mit sich, dass die den Verbindungskanal bildenden Elemente von außen leicht bedienbar sind und die Länge des Verbindungskanal auch ohne konstruktive Eingriffe an weiteren Teilen der Lagerbuchse bzw. der von dieser abzufedernden, Kraft-übertragenden Elemente verändert werden kann. Die erfindungsgemäße Lösung erlaubt darüber hinaus mit Vorteil die Verwendung üblicher Materialien wie insbesondere handelsüblicher Stahlsorten, aber auch z. B. Kunststoffe, und erfordert keine besonderen Materialien mit vorgebbaren besonderen mechanischen Eigenschaften.

Erfindungsgemäß ist das ringförmige Gehäuse an einem Ende mit einem ringförmigen und nach innen vorspringenden Rand oder Ansatz ausgebildet, an welchem der Deckel anliegt. Dies ist eine konstruktiv sehr günstige Lösung, bei der eine einfache Fixierung der Stützringe möglich ist, in dem auf der dem vorspringenden Rand abgewandten Seite die Einschuböffnung vorhanden ist und das GummiMetallteil etwa mit entsprechenden Splinten, Bolzen oder Sicherungsringen/Simmeringen fixiert werden kann.

Eine weitere vorteilhafte Ausbildung besteht darin, dass der Stützring einen mit einer Kammer und oder einem Verbindungskanal kommunizierenden Füllkanal und/oder Entlüftungskanal aufweist, was die Zugänglichkeit und die Befüllung der Kammern erheblich vereinfacht. Eine solche Ausführung lässt sich auch auf einfache Weise und unter Vermeidung von Lufteinschlüssen mit dem Hydraulikfluid / der Hydraulikflüssigkeit befüllen. Die Befüllung ist durch eine Füllbohrung mittels einer Befüll-Vorrichtung auch mit Vakuumerzeugung möglich.

Eine weitere vorteilhafte Ausbildung besteht darin, dass der durch die ring- oder spiralförmige Ausnehmungen gebildete Verbindungskanal in den äußeren Bereichen des Stützrings angeordnet ist, vorzugsweise im Wesentlichen in der äußeren Ringhälfte außerhalb des mittleren Durchmessers. Da das gummielastische Material das quasi-statische Verhalten bestimmt, wohingegen das Hydraulikfluid und damit die Ausbildung des als Drosselkanal ausgebildeten Verbindungskanals maßgeblich die dynamischen Eigenschaften der Buchse bestimmt, kann durch ein lange Drosselstrecke, d.h. bei der Anordnung des Verbindungskanals auf möglichst großem Durchmesser, natürlich große Variabilität der Dämpfung bei einer dynamischen mechanischen Belastung erreicht werden.

Der Verbindungskanal kann etwa als ebene Spirale oder als ineinander gedrehte Mehrfachspirale ausgeführt werden. Dies erlaubt ebenso ein platzsparende Anordnung des Verbindungskanals wie eine Ausbildung des Verbindungskanals im Wesentlichen kreisbogenförmig oder aus kreisbogenförmigen Teilkanälen bestehend.

In besonderer Weise vorteilhaft ist, wie bereits dargelegt, die Anwendung der erfindungsgemäßen hydraulischen Lagerbuchse als Radsatzführungsbuchse innerhalb eines Fahrwerks für ein Schienenfahrzeug. Hier ergibt sich bei einem Bauteil mit sehr geringen Abmessungen die Möglichkeit einer hohen Beeinflussung der Steifigkeit abhängig von der Frequenz der einwirkenden Belastungen/Kräfte.

Weitere Vorteile ergeben sich durch eine hier sehr einfache Möglichkeit der Modifikation der nierenförmigen Kammern und im Verhältnis zum Gummimetallteil bzw. zur Gummipolstergeometrie. Ebenfalls erreicht man eine einfache Variation der dynamischen Steifigkeit und Steifigkeitsverhältnis Cₓ statisch zu Cₓ dynamisch. Je nach geforderten dynamischen Steifigkeiten sind mehrere Kanallagen, Kanalquerschnitte und verschiedene Kanallängen im Kanalsystem möglich. Der Einsatz anderer Materialien wie Aluminium oder Kunststoff ist ebenfalls möglich.

Zudem sind unterschiedlichen Flüssigkeiten mit unterschiedlichen Zähigkeiten / Viskositäten einsetzbar. Aufgrund von Temperaturunempfindlichkeit findet aktuell Glykol Anwendung.

Die erfindungsgemäße Ausbildung erlaubt auch eine einfache, kostengünstige und dennoch prozesssichere Montage.

Anhand eines Ausführungsbeispiels soll die Erfindung näher erläutert werden. Dabei zeigen:
- Fig. 1: perspektivisch in zwei Ansichten eine erfindungsgemäße als Radsatzführungsbuchse ausgebildete hydraulische Lagerbuchse,
- Fig. 2: eine Seitenansicht der Radsatzführungsbuchse gemäß Fig. 1 im Längsschnitt,
- Fig. 3: einen vergrößerten Ausschnitt aus einer Schnittdarstellung über den Umfang der Radsatzführungsbuchse,
- Fig. 4: eine Vorderansicht und eine Rückansicht der erfindungsgemäßen Radsatzführungsbuchse, teilweise geschnitten.

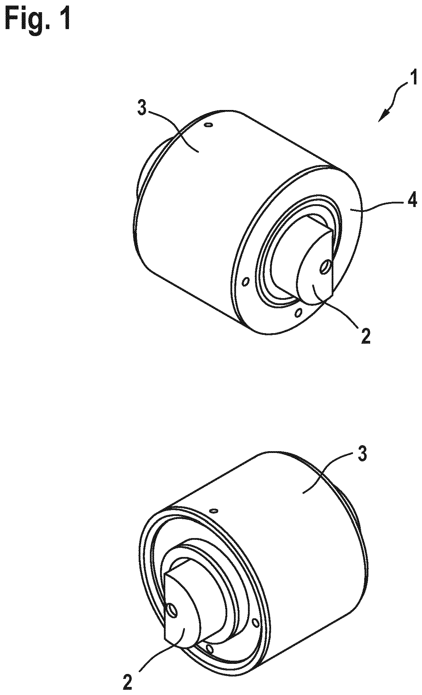

Fig. 1 zeigt perspektivisch in zwei Ansichten eine erfindungsgemäße als Radsatzführungsbuchse für ein Schienenfahrzeug dienende hydraulische Lagerbuchse 1, die einen Zapfen 2 aufnimmt, der als Lenkerbolzen zu einem Lenkgestänges eines hier nicht näher dargestellten Schienenfahrzeugs gehört. Der Zapfen 2 weist beidseitig eine Abflachung auf, die zur drehsicheren Aufnahme im Lenker des Lenkgestänges dient.

Die Lagerbuchse 1 weist ein einen innenliegenden Gummi-Verbund-Körper, vorzugsweise Gummi-Metall-Körper auf, in welchen der Zapfen 2 aufgenommen ist und ein im Wesentlichen hülsenartiges äußeres Gehäuseelement 3, welches an einem Ende mit einem ringförmigen und nach innen vorspringenden Rand oder Ansatz 4 ausgebildet ist.

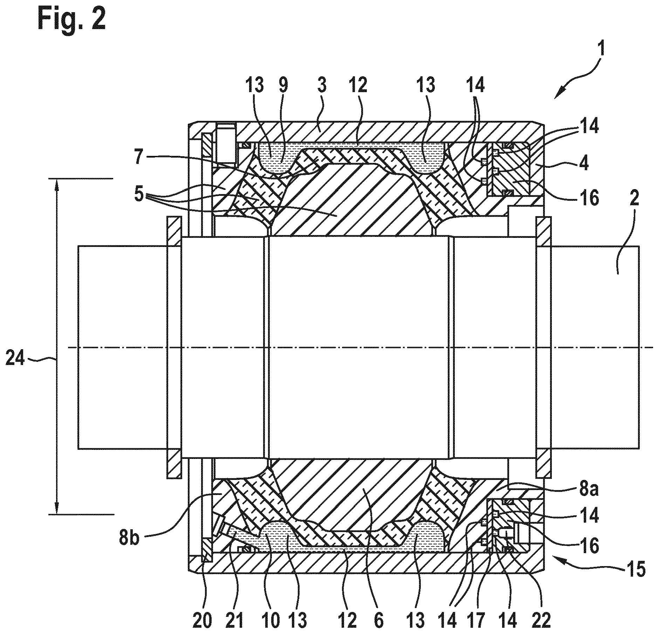

Fig. 2 zeigt die hydraulische Lagerbuchse 1 in einem Längsschnitt. Hier erkennt man nun deutlich den innenliegenden Gummi-Metall-Körper 5, der hier aus einer zur Aufnahme des Zapfens 2 ausgebildeten metallischen innere Buchse 6, einem über den äußeren Umfang der Buchse 6 anvulkanisierten und die Buchse im Wesentlichen umfassenden ringförmigen Gummikörper 7 sowie aus zwei an beiden axialen Enden des Gummikörpers 7 anvulkanisierten ringförmigen metallischen Stützringen 8 besteht. Die Stützringe 8, d.h. 8a und 8b sind am Innenumfang des den inneren Gummi-Metall-Körper 5 umgebenden Gehäuses 3 abgestützt.

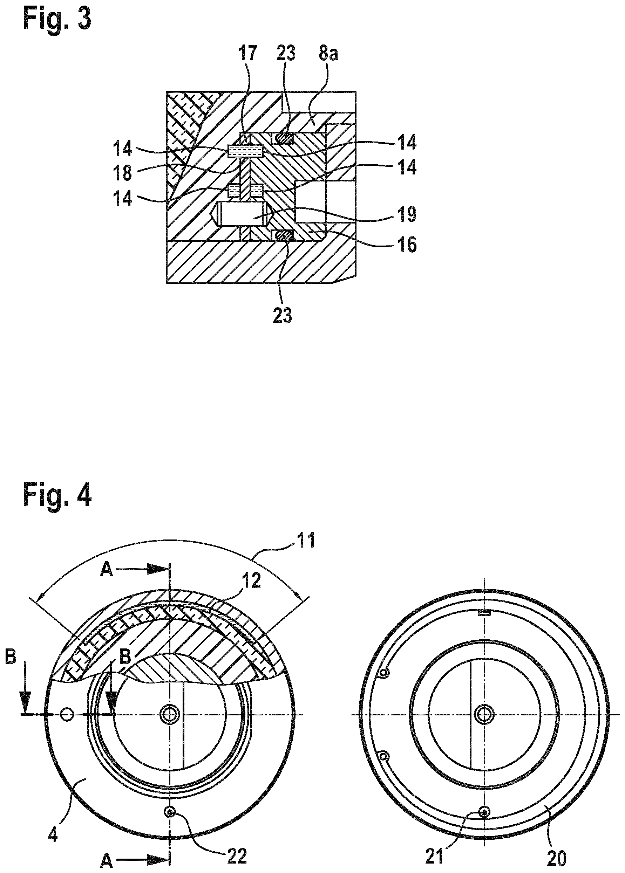

Die Fig. 2 zeigt auch eine obere und eine untere zwischen dem ringförmigen Gummikörper 7 und dem ringförmigen Gehäuse 3 ausgebildete, mit einer Hydraulikflüssigkeit befüllbare Kammern 9 und 10. Diese Kammern umgeben das innenliegende Gummimetallteil, d.h. den Gummikörper 7 in Umfangsrichtung jeweils über einen Teilbereich 11 des Umfangs, wie in der Zusammenschau mit der Fig.4 deutlich wird. Im mittleren Bereich bilden die Kammern eine Art nierenförmigen Ringspalt 12, während sie endseitig jeweils Ausbuchtungen 13 aufweisen.

Die Kammern 9 und 10 kommunizieren über einen aus mehreren Kanalteilen bzw. Kanalstücken zusammengesetzten Verbindungs- und Drosselkanal miteinander, der die Kammern zum Austausch von Flüssigkeit miteinander verbindet.

Der Verbindungskanal bzw. die Kanalstücke entstehen dadurch, dass an mindestens der rechten Stirnseite 15 der Hydraulische Lagerbuchse 1 ein axial außenseitig angeordneter und an dem endseitigen Stützring 8a außen anliegender ringförmiger Deckel 16 vorgesehen ist und der Verbindungs- und Drosselkanal durch zusammenwirkende und im Wesentlichen ring- oder spiralförmige Ausnehmungen 14 im Stützring 8a einerseits und im Deckel 16 anderseits ausgebildet ist, wobei die Ausnehmungen über hier nicht näher dargestellte Bohrungen an die kommunizierenden Kammern 9 und 10 angeschlossen sind.

Deckel 16 und Stützring 8a sind dabei durch einen Zwischenring 17 voneinander getrennt sind, welcher Durchgänge oder Bohrungen zur Verbindung der beiderseits ausgebildeten Ausnehmungen 14 aufweist.

Eine dieser Bohrungen 18, die die beiderseits des Zwischenrings 17 im Stützring 8a und im Deckel 16 ausgebildeten Ausnehmungen 14 miteinander verbinden, erkennt man in der Fig. 3

Der Deckel 16 und der Zwischenring 17 sind zur Veränderung der Kanalgeometrie, d.h. der Kanallänge und damit der Drosseleigenschaften relativ zum Stützring gegeneinander drehbeweglich und durch einem Zylinderstift 19 in unterschiedlichen relativen Stellungen zueinander fixierbar.

Der Deckel 16 ist mit O-Ringen 23 gegenüber dem Stützring 8a und gegenüber dem Gehäuse abgedichtet, liegt innen an dem nach innen vorspringenden Rand 4 des ringförmigen Gehäuses 3 an und ist auf der anderen Seite zusammen mit dem Gummi-Metall-Körper 5 durch einen Sichrungsring/Simmering 20 festgesetzt, wie sich durch die Zusammenschau mit den Fig. 1 bis 4 ergibt.

Die Kammer 10 bzw. der durch die Ausnehmungen 14 gebildete Verbindungskanal weisen einen kommunizierenden Füllkanal 21 und einen Entlüftungskanal 22 auf.

Die ringförmigen Ausnehmungen 14, und damit der durch letztere gebildete Verbindungskanal, sind in den äußeren Bereichen des Stützrings 8a angeordnet ist, nämlich in der äußeren Ringhälfte außerhalb des mittleren Durchmessers 24.

### Bezugszeichenliste:

- 1: Hydraulische Lagerbuchse
- 2: Zapfen
- 3: Gehäuseelement
- 4: vorspringenden Rand
- 5: Gummi-Metall-Körper
- 6: innere Buchse
- 7: Gummikörper
- 8 a, b: Stützring
- 9: Kammer
- 10: Kammer
- 11: Teilbereich des Umfangs
- 12: nierenförmiger Ringspalt
- 13: Ausbuchtung
- 14: Ausnehmung zur Bildung des Verbindungskanals
- 15: Stirnseite
- 16: ringförmiger Deckel
- 17: Zwischenring
- 18: Bohrung
- 19: Zylinderstift
- 20: Simmering
- 21: Füllkanal
- 22: Entlüftungskanal
- 23: O-Ring
- 24: mittlerer Durchmesser des Stützrings

## Patentansprüche

1. Hydraulische Lagerbuchse (1) als Radsatzführungsbuchse innerhalb eines Fahrwerks für ein Schienenfahrzeug, wobei die hydraulische Lagerbuchse folgende Merkmale aufweist:
- einen innenliegenden Gummi-Metall-Körper (5), aufweisend
i. eine zur Aufnahme eines Zapfens (2) ausgebildete innere Buchse (6), vorzugsweise aus Metall
ii. einen über den äußeren Umfang der Buchse (6) anvulkanisierten und die Buchse im Wesentlichen umfassenden ringförmigen Gummikörper (7) sowie
iii. zwei an beiden axialen Enden des Gummikörpers anvulkanisierte ringförmige Stützringe (8a, 8b), vorzugsweise aus Metall
- ein den inneren Gummi-Metall-Körper umgebendes außenliegendes ringförmiges Gehäuse (3), an dessen Innenumfang die Stützringe (8a, 8b) abgestützt sind,
- mindestens zwei in Umfangsrichtung zwischen dem ringförmigen Gummikörper (7) und dem ringförmigen Gehäuse (3) ausgebildete, über Teilbereiche des Umfangs sich erstreckende und mit einer Hydraulikflüssigkeit befüllbare Kammern (9, 10),
wobei die Kammern (9, 10) über mindestens einen Verbindungs- und Drosselkanal miteinander kommunizieren, der die Kammern zum Austausch von Flüssigkeit miteinander verbindet, wobei an einer Stirnseite (15) der hydraulischen Lagerbuchse (1) ein axial außenseitig angeordneter ringförmiger und an dem endseitigen Stützring (8a) außen anliegender Deckel (16) vorgesehen ist, **dadurch gekennzeichnet, dass** der Verbindungs- und Drosselkanal durch zusammenwirkende und im Wesentlichen ring- oder spiralförmige Ausnehmungen (14) im Stützring (8a) einerseits und im Deckel (16) anderseits ausgebildet ist, wobei die Ausnehmungen (14) über Bohrungen an die kommunizierenden Kammern (9, 10) angeschlossen sind, wobei das ringförmige Gehäuse (3) an einem Ende mit einem ringförmigen und nach innen vorspringenden Rand oder Ansatz (4) ausgebildet ist, an welchem der Deckel (16) anliegt und wobei der Deckel (16) und Stützring (8a) durch mindestens einen Zwischenring (17) voneinander getrennt sind, welcher Durchgänge oder Bohrungen (18) zur Verbindung der beiderseits ausgebildeten Ausnehmungen aufweist.

2. Hydraulische Lagerbuchse nach Anspruch 1, bei der Deckel (16) und Stützring (8a) durch mindestens einen Zwischenring (17) voneinander getrennt sind, welcher ebenfalls ring- oder spiralförmige Ausnehmungen aufweist, die mit den Ausnehmungen im Stützring und/oder im Deckel kommunizieren.

3. Hydraulische Lagerbuchse nach einem der Ansprüche 1 oder 2, bei der Deckel (16) und/oder der Zwischenring (17) zur Veränderung der Kanalgeometrie relativ zum Stützring (8a) und/oder gegeneinander drehbeweglich und/oder in unterschiedlichen relativen Stellungen zueinander fixierbar ausgeführt sind.

4. Hydraulische Lagerbuchse nach einem der Ansprüche 1 bis 3, bei der der Stützring (8a, 8b) einen mit einer Kammer und oder einem Verbindungskanal kommunizierenden Füllkanal und/oder Entlüftungskanal aufweist.

5. Hydraulische Lagerbuchse nach einem der Ansprüche 1 bis 4, bei der der durch die ring- oder spiralförmige Ausnehmungen gebildete Verbindungskanal in den äußeren Bereichen des Stützrings (8a) angeordnet ist, vorzugsweise im Wesentlichen in der äußeren Ringhälfte außerhalb des mittleren Durchmessers (24).

## Claims

1. Hydraulic bearing bushing (1) as a wheelset guide bushing within a chassis for a rail vehicle, the hydraulic bearing bushing having the following features:
- an inner rubber/metal body (5), having
i. an inner bushing (6), preferably made from metal, which is configured for receiving a journal (2),
ii. an annular rubber body (7) which is vulcanized on over the outer circumference of the bushing (6) and encloses the bushing substantially,
iii. two annular supporting rings (8a, 8b), preferably made from metal, which are vulcanized on at the two axial ends of the rubber body,
- an outer annular housing (3) which surrounds the inner rubber/metal body and on the inner circumference of which the supporting rings (8a, 8b) are supported,
- at least two chambers (9, 10) which are configured in the circumferential direction between the annular rubber body (7) and the annular housing (3), extends over part regions of the circumference, and can be filled with a hydraulic liquid,
the chambers (9, 10) communicating with one another via at least one connecting and throttling channel which connects the chambers to one another for the exchange of liquid, an annular cover (16) which is arranged axially on the outer side and bears on the outside against the end-side supporting ring (8a) being provided on an end side (15) of the hydraulic bearing bushing (1), **characterized in that** the connecting and throttling channel is configured by way of interacting and substantially annular or helical recesses (14) in the supporting ring (8a) on one side and in the cover (16) on the other side, the recesses (14) being connected via bores to the communicating chambers (9, 10), the annular housing (3) being configured at one end with an annular and inwardly projecting edge or attachment (4), against which the cover (16) bears, and the cover (16) and the supporting ring (8a) being separated from one another by way of at least one intermediate ring (17) which has passages or bores (18) for the connection of the recesses which are configured on both sides.

2. Hydraulic bearing bushing according to Claim 1, in the case of which the cover (16) and the supporting ring (8a) are separated from one another by way of at least one intermediate ring (17) which likewise has annular or helical recesses which communicate with the recesses in the supporting ring and/or in the cover.

3. Hydraulic bearing bushing according to either of Claims 1 and 2, in the case of which the cover (16) and/or the intermediate ring (17) are configured such that they/it can be moved rotationally relative to the supporting ring (8a) and/or with respect to one another and/or can be fixed in different relative positions with respect to one another in order to change the channel geometry.

4. Hydraulic bearing bushing according to one of Claims 1 to 3, in the case of which the supporting ring (8a, 8b) has a ventilating channel and/or a filling channel which communicates with a chamber and/or a connecting channel.

5. Hydraulic bearing bushing according to one of Claims 1 to 4, in the case of which the connecting channel which is formed by way of the annular or helical recesses is arranged in the outer regions of the supporting ring (8a), preferably substantially in the outer ring half outside the mean diameter (24).

## Revendications

1. Coussinet hydraulique (1) servant de douille de guidage d'essieu dans un mécanisme de roulement d'un véhicule ferroviaire, le coussinet hydraulique présentant les caractéristiques suivantes :
- un corps intérieur (5) en caoutchouc-métal comportant
i. une douille intérieure (6), de préférence en métal, destinée à recevoir une broche (2)
ii. un corps annulaire (7) en caoutchouc vulcanisé sur la périphérie extérieure de la douille (6) et entourant sensiblement la douille et
iii. deux bagues de support annulaires (8a, 8b), de préférence en métal, vulcanisées aux deux extrémités axiales du corps en caoutchouc
- un boîtier annulaire extérieur (3) qui entoure le corps intérieur en caoutchouc-métal et sur la périphérie intérieure duquel les bagues de support (8a, 8b) sont en appui,
- au moins deux chambres (9, 10) formées dans la direction périphérique entre le corps annulaire (7) en caoutchouc et le boîtier annulaire (3), s'étendant sur des régions de la périphérie et pouvant être remplies d'un fluide hydraulique,
les chambres (9, 10) communiquant entre elles par le biais d'au moins un canal de liaison et d'étranglement qui relie les chambres entre elles en vue de l'échange de liquide, un couvercle annulaire (16) étant prévu sur le côté frontal (15) du coussinet hydraulique (1), lequel couvercle est disposé axialement du côté extérieur et vient extérieurement en appui sur la bague de support côté extrémité (8a), **caractérisé en ce que** le canal de liaison et d'étranglement est formé par des évidements (14) coopérants et sensiblement annulaires ou en spirale ménagés dans la bague de support (8a) d'une part et dans le couvercle (16) d'autre part, les évidements (14) étant reliés par des alésages aux chambres communicantes (9, 10), le boîtier annulaire (3) étant formé à une extrémité avec un bord ou épaulement annulaire (4), saillant vers l'intérieur, sur lequel le couvercle (16) vient en appui et le couvercle (16) et la bague de support (8a) étant séparés l'un de l'autre par au moins une bague intermédiaire (17) qui comporte des passages ou alésages (18) destinés à relier les évidements formés des deux côtés.

2. Coussinet hydraulique selon la revendication 1, dans lequel le couvercle (16) et la bague de support (8a) sont séparés l'un de l'autre par au moins une bague intermédiaire (17) qui comporte également des évidements annulaires ou en spirale qui communiquent avec les évidements ménagés dans la bague de support et/ou dans le couvercle.

3. Coussinet hydraulique selon l'une des revendications 1 ou 2, dans lequel le couvercle (16) et/ou la bague intermédiaire (17) sont conçus pour modifier la géométrie des canaux par rapport à la bague de support (8a) et/ou pour être mobiles en rotation l'un par rapport à l'autre et/ou pour pouvoir être fixés l'un par rapport à l'autre dans différentes positions relatives.

4. Coussinet hydraulique selon l'une des revendications 1 à 3, dans lequel la bague de support (8a, 8b) comporte un canal de remplissage et/ou un canal de ventilation communiquant avec une chambre et/ou un canal de liaison.

5. Coussinet hydraulique selon l'une des revendications 1 à 4, dans lequel le canal de liaison formé par les évidements annulaires ou en spirale est disposé dans les régions extérieures de la bague de support (8a), de préférence sensiblement dans la moitié extérieure de la bague en dehors du diamètre moyen (24) .
